# EUROPÄISCHE PATENTSCHRIFT

(11) **EP 0 638 372 B1**
(45) Veröffentlichungstag und Bekanntmachung des Hinweises auf die Patenterteilung: **18.12.1996**
(21) Anmeldenummer: 94112360.6
(22) Anmeldetag: 08.08.1994
(51) Int. Cl.: B09B 3/00, B09B 1/00

(54) **Gerät zum Injizieren von Gasen in Böden**
Device for injecting gases in the ground
Appareil d'injection de gaz dans des sols

(30) Priorität: 11.08.1993 DE 4326893
(43) Veröffentlichungstag der Anmeldung: 15.02.1995
(73) Patentinhaber: IWM GmbH, D-59469 Ense (DE)
(72) Erfinder: Horst, Hartwig, D-59581 Warstein (DE); Döring, Rüdiger, D-59469 Ense (DE)
(74) Vertreter: Fritz, Edmund Lothar, Dipl.-Chem.

(56) Entgegenhaltungen:
- DE-A- 4 129 511
- US-A- 5 193 934
- US-A- 5 217 617

## Beschreibung

Die vorliegende Erfindung betrifft ein Gerät zum Injizieren von Gasen in Böden, Wasser- und Abwasseranlagen oder Gewässer umfassend einen Gasbehälter, der an eine Versorgungsleitung angeschlossen ist und von dem ein in den Boden eingeführtes Injizierrohr ausgeht, umfassend weiter einen Druckkolben, der in einem Zylinderraum axial beweglich ist, wobei in einem Raum oberhalb des Druckkolbens durch Gas ein Gegendruck erzeugt wird und wobei in einer Stellung des Druckkolbens das Behandlungsgas plötzlich aus dem Gasbehälter in das Injizierrohr einströmen kann, während in einer anderen Stellung des Druckkolbens die Verbindung zwischen dem Inneren des Gasbehälters und dem Injizierrohr verschlossen ist. Aus der EP-A-489 705 ist ein Gerät zum Injizieren von Gasen in Böden der vorbeschriebenen Art bekannt. Die vorbekannte Vorrichtung weist im unteren Bereich des Injizierrohrs eine Lanze mit einer Perforation auf, über die das Behandlungsgas zur Belüftung schlagartig in das Erdreich entweichen kann. Aufgrund dieser Perforation der Lanze mit einer Vielzahl von Öffnungen wird jedoch ein Gasaustritt in das Erdreich erzeugt, der nicht feinperlig genug ist. Die austretenden Gasbläschen haben eine relativ geringe Oberfläche. Außerdem ist bei der vorbekannten Vorrichtung der erzeugte Druck im Einschießbereich und damit die Reichweite der Vorrichtung und der Bodenbereich um den Austritt an der Lanze herum, der belüftet wird, noch zu gering. Außerdem sind bei diesem bekannten Gerät der Gasbehälter und das Injizierrohr eine Einheit, so daß bei einer notwendigen Reparatur Injizierrohr und Gasbehälter ausgetauscht werden müssen, was mit entsprechendem Aufwand verbunden ist.

Die Aufgabe der vorliegenden Erfindung besteht somit darin, ein Gerät der eingangs genannten Art weiter zu entwickeln, das eine effektivere Belüftung insbesondere kontaminierter Böden, Wasser- und Abwasseranlagen oder Gewässer zuläßt. Die Lösung dieser Aufgabe liefert ein erfindungsgemäßes Gerät der eingangs genannten Art mit den kennzeichnenden Merkmalen des Hauptanspruchs.

Die Anwendung der vorliegenden Erfindung kommt in Betracht für Deponien aber zum Beispiel auch im Bereich der Abwasser- und Gewässerbehandlung an Wasser- und Abwasseranlagen oder Gewässern, zum Beispiel Belebungsbecken, Klärteichen, oder kontaminierten Seen. Darüber hinaus können mit dem erfindungsgemäßen Gerät auch speziell zum Schadstoffabbau gezüchtete Bakterien in Gewässer oder Böden eingebracht werden. Mit dem erfindungsgemäßen Gerät kann Sauerstoff, Luft, Stickstoff oder auch ein anderes Behandlungsgas injiziert werden.

Aufgrund der erfindungsgemäß vorgesehenen Arbeitsweise des Geräts ist ein explosionsartiges Injizieren des Behandlungsgases unter sehr hohem Druck möglich. Dabei werden erfindungsgemäß Düsen mit sehr feinen Düsenöffnungen verwendet, vorzugsweise im Bereich von einigen Zehntel Millimetern Querschnitt. Bei Verwendung solcher nadelgroßer Öffnungen wird an der Austrittsstelle des Injizierrohrs ein sehr hoher Druck erzeugt, so daß das Behandlungsgas mit sehr großer Reichweite in den umgebenden Boden oder das Gewässer eindringt. Aufgrund der feinen Düsenöffnungen wird ein sehr feinperliges Behandlungsgas injiziert, das eine vergleichsweise große Oberfläche hat. Zwischen den intervallartigen Druckstößen können längere Ruhezeiten sinnvoll sein, damit sich zwischenzeitlich das Material wieder setzt. Dadurch wird verhindert, daß sich bei Belüftung zum Beispiel eines gewachsenen Bodens Kanäle ausbilden und dadurch das Behandlungsgas immer die gleichen Wege nimmt.

Ein weiterer Vorteil bei dem erfindungsgemäßen Gerät liegt darin, daß Gasbehälter und Injizierrohr voneinander getrennt sind, so daß bei möglichen Defekten ein Austausch einer dieser beiden Einheiten und somit eine einfachere Reparatur und auch eine einfachere Wartung möglich ist.

Ein erfindungsgemäßes Gerät kann auf dem Boden der zu behandelnden Deponie aufgestellt werden, wobei das an das Gerät angeschlossene Injizierrohr in eine Bohrung im Boden eingeführt wird. Das Gerät ist an eine Versorgungsleitung für das Behandlungsgas angeschlossen. Wenn das Gerät in Betrieb ist, wechselt ständig eine längere Füllperiode mit einer kurzfristigen stoßweisen Injizierperiode ab. Der Wechsel erfolgt automatisch mit Hilfe einer pneumatischen Umsteuerung. Dabei besteht die Möglichkeit Injizierdruck und die Zeitabstände der einzelnen Injizierstöße einzustellen.

Auch bei Druckschwankungen ist im wesentlichen eine gleichmäßige Gasmenge für die Injektionen garantiert. Durch eine Regulierschraube kann die Injektionszeit je nach Bedarf eingestellt werden. Hierdurch ist es möglich, daß die Gesamtanlage in ihrer Funktionsweise so eingestellt wird, daß kaum noch Druckschwankungen von der Geberseite (Mengenzufluß) vorhanden sind. Somit ist eine gleichmäßige Mengenabgabe und ein gleichmäßiger Injektionsdruck gewährleistet. Eine elektrische Umsteuerung, die bei explosionsgefährdeten Anlagen nicht zulässig ist, entfällt, da der Umsteuerungsvorgang ausschließlich pneumatisch erfolgt. Durch die Regeleinrichtung, die ebenfalls auf pneumatischer Basis beruht, kann die Umsteuerung durch manuelle Einstellung in erforderlichen Bereichen verzögert werden. Durch unterschiedliche Querschnitte der Gas- bzw. Luftführung, sowie durch ein Düsensystem an der Kolbenhülse füllt sich der Kolbenspeicher schnell. Nach der eingestellten Verzögerungszeit führt der Steuerkolben unverzüglich seine Umsteuerbewegung aus, womit das Behandlungsgas schlagartig für das Injektionsrohr freigegeben wird.

Neben einem Schußkopf im unteren Endbereich des Injizierrohrs, der mehrere vorzugsweise auf einem Ring angeordnete über den Umfang verteilte Düsen aufweist, können ein oder mehrere weitere Düsenköpfe mit Abstand vom unteren Ende des Injizierrohrs mit ähnlichen radial über den Umfang verteilt angeordneten Düsen vorhanden sein. Diese Düsen sind vorzugsweise auswechselbar, so daß der Querschnitt der Düsenöffnung veränderbar ist. Die Düsenöffnungen können beispielsweise einen Durchmesser von zwischen 0,05 und 0,3 mm, vorzugsweise zwischen 0,1 und 0,2 mm, aufweisen.

Im folgenden wird die Erfindung unter Bezugnahme der beiliegenden Zeichnungen an einem Ausführungsbeispiel beschrieben.

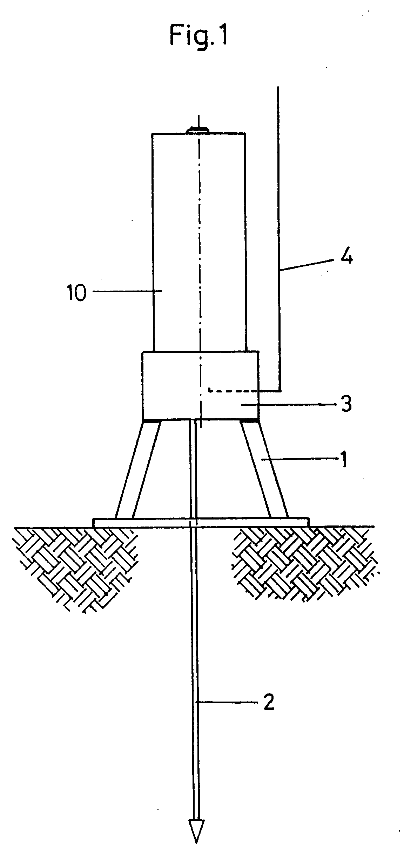

- Fig. 1: ist eine Ansicht des gesamten Gerätes nach der Erfindung;
- Fig. 2: ist ein Schnitt durch Gasbehälter und Ventilgehäuse;
- Fig. 3: zeigt in vergrößertem Maßstab einen Schnitt durch den Bereich des Umsteuerkolbens im Ventilgehäuse bei Stellung "Füllen";
- Fig. 4: ist ein Schnitt entsprechend Fig. 3, jedoch bei Stellung "Injizieren".
- Fig. 5: ist eine Schnittansicht durch das Injizierrohr im Bereich des Schußkopfs;
- Fig. 6: ist eine Schnittansicht durch das Injizierrohr gemäß einer Variante der Erfindung.

Das Gerät weist ein in den Boden eingeführtes Injizierrohr 2 auf zum Einführen eines Behandlungsgases. Das Injizierrohr ist an einem Ventilgehäuse in einem Armaturenkasten 3 angeschlossen. Der Armaturkasten wird durch ein Gestell 1 getragen, das auf der Bodenfläche abgestellt wird. Über dem Armaturenkasten ist ein Gasbehälter in Form eines Zylinders 10. Eine Versorgungsleitung 4 führt das Behandlungsgas zum Ventilgehäuse im Armaturenkasten und von dort in den zylindrischen Gasbehälter 10. Das Behandlungsgas wird in rhythmischen Stößen über das Rohr 2 injiziert. Dabei ist der Injektionsdruck einstellbar ebenso wie die Zeitabstände zwischen den Injektionen. Die Umstellung zwischen Füllen und Injizieren erfolgt automatisch durch eine pneumatische Umsteuerung.

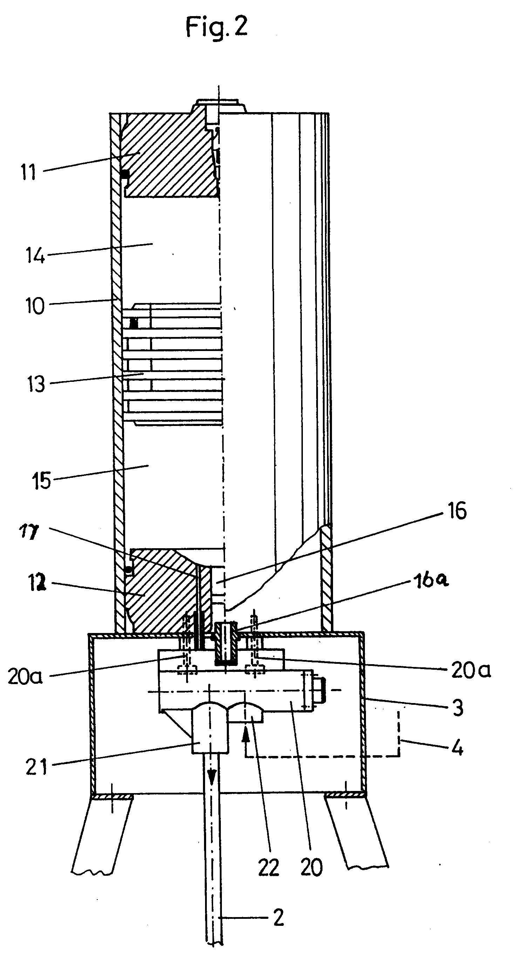

Weiter wird auf Fig. 2 Bezug genommen. Der zylindrische Gasbehälter 10 ist oben durch einen Deckel 11 und unten durch einen Boden 12 verschlossen. Der Zylinder nimmt einen verschiebbaren Druckkolben 13 auf. Der Raum 15 unterhalb des Kolbens dient zur Aufnahme des Behandlungsgases, der Raum 14 über dem Kolben ist zur Aufnahme eines Gegendruckgases vorgesehen.

Das Ventilgehäuse 20 im Armaturenkasten 3 ist mit Verbindungsschrauben 20a mit dem Boden des Zylinders verbunden. Das Ventilgehäuse hat einen Anschlußstutzen 21, wo das Injizierrohr 2 angeschlossen wird und einen Stutzen 22 für den Anschluß der Versorgungsleitung 4. Beim Füllen des Zylinders mit Behandlungsgas ist ein vor dem Ventilgehäuse aufgenommener Steuerkolben so eingestellt, daß zwischen dem Anschlußstutzen 22 und einem Hauptkanal 16 im Boden 12 des Zylinders eine Verbindung hergestellt wird, so daß das Behandlungsgas in den Raum 15 einströmen kann. Dabei wird das Gegendruckgas im Raum 14 komprimiert bis ein Druckgleichgewicht hergestellt ist und der Druckkolben zum Stehen kommt. Zur Verbindung zwischen Ventilgehäuse und Hauptkanal 16 ist eine Dichtungshülse 16a eingebaut.

Bei Erreichen eines Betriebsdruckes steuert der Steuerkolben im Ventilgehäuse derart um, daß die Verbindung zwischen Anschlußstutzen 22 und dem Hauptkanal 16 geschlossen wird, wobei sich jedoch die Verbindung zwischen dem Hauptkanal 16 und dem Anschlußstutzen 21 für das Injizierrohr öffnet, so daß das gesamte Behandlungsgas im Raum 15 in das Injizierrohr gedrückt wird und dabei sich der Druckkolben 13 durch den Gegendruck im Raum 14 wieder nach unten bewegt. Die Umsteuerung des Steuerkolbens 25 erfolgt pneumatisch über einen Bypasskanal 17 im Boden 12.

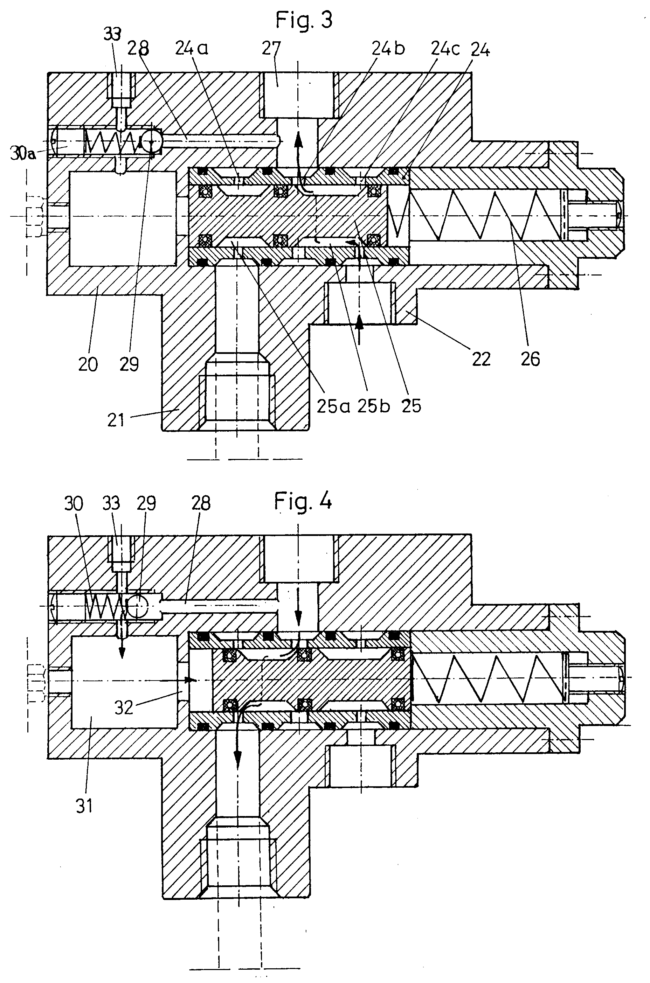

Einzelheiten des inneren Aufbaus des Ventilgehäuses 20 ergeben sich aus Fig. 3 und 4. Der Steuerkolben 25 wird von einer feststehenden Kolbenhülse 24 aufgenommen. In der Füllstellung, die Fig. 3 zeigt, befindet sich der Steuerkolben in einer linken Anschlagposition unter dem Druck seiner Feder. Dabei wird ein Weg für das Behandlungsgas frei gemacht vom Anschlußstutzen 22 über Düsenöffnungen 24b, 24c in der Kolbenhülse, über einen Ringraum 25b im Kolben eine Bohrung 27 zum Hauptkanal 16. Der Betriebsdruck gelangt über einen Bypasskanal 33 zu einer Reguliereinrichtung für einen Umsteuerdruck bestehend aus einer Regelkugel 29, einer zugeordneten Feder 30 und einer Justierschraube 30a, sowie einer Bypassbohrung 28. An diesen Elementen ist ein Umsteuerungsdruck in einer Nebenkammer 31 einstellbar. Durch diesen Druck wird der Steuerkolben entgegen der Feder 26 in seine rechte Anschlagstellung, die Fig. 4 zeigt, verschoben. Dabei wird der Anschlußstutzen 22 gesperrt und der Weg vom Hauptkanal zum Anschlußstutzen 21 für das Injizierrohr frei gemacht, wie auf Fig. 4 mit Pfeilen dargestellt. Durch Einstellung der Regelvorrichtung kann der jeweilige Zeitpunkt für die Umsteuerung bestimmt werden. Bei der Stellung des Steuerkolbens nach Fig. 4 gelangt das Behandlungsgas über entsprechende Düsenöffnungen in der Kolbenhülse und über einen Ringraum 25a im Steuerkolben.

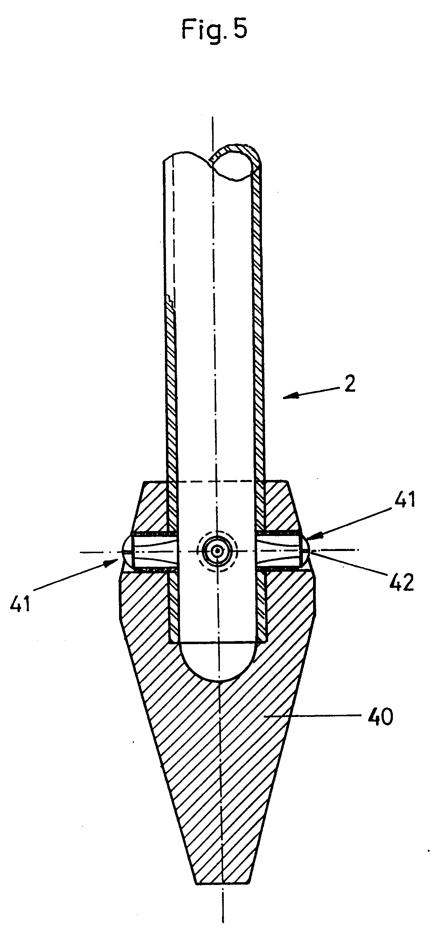

Fig. 5 zeigt einen Schnitt durch ein erfindungsgemäßes Injizierrohr 2 im unteren Bereich, dort wo das Behandlungsgas austritt. Es ist dort ein Schußkopf 40 vorgesehen, der mehrere radial nach außen gerichtete und auf dem Umfang verteilt angeordnete Düsen 41 aufweist. Diese Düsen können beispielsweise im Abstand von 90° angeordnet sein, so daß vier Düsen vorhanden sind. Diese Düsen 41 weisen einen von dem Rohrinneren des Injizierrohrs 2 ausgehenden sich nach außen hin verjüngenden Kanal auf, der in die feine Düsenöffnung 42 einmündet. Durch Herausschrauben können die Düsen 41 ausgewechselt und gegen eine andere Düse mit einer anderen Düsenöffnung 42 ausgetauscht werden.

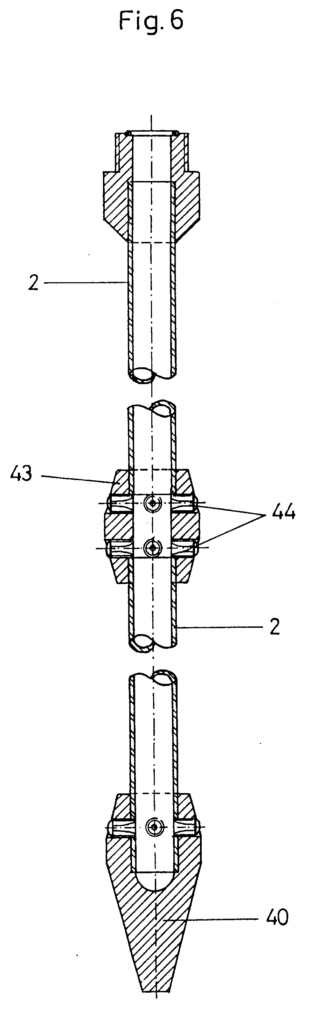

Bei der Variante gemäß Fig. 6 der Erfindung ist neben dem Schußkopf 40 am unteren Ende des Injizierrohrs 2 mit Abstand darüber ein weiterer Düsenkopf 43 angeordnet. In diesem Düsenkopf 43 sind radial über den Umfang verteilt weitere ähnlich aufgebaute Düsen 44 vorhanden. In dem Ausführungsbeispiel sind zwei mal vier Düsen vorhanden, die paarweise auf zwei Ringen über den Umfang verteilt in dem Düsenkopf 43 angeordnet sind. Durch diese Ausbildung kann gleichzeitig über ein Injizierrohr 2 in verschiedenen Bodentiefen eine Belüftung erfolgen.

## Patentansprüche

1. Gerät zum Injizieren von Gasen in Böden, Wasser- und Abwasseranlagen oder Gewässer umfassend einen Gasbehälter, der an eine Versorgungsleitung angeschlossen ist und von dem ein in den Boden eingeführtes Injizierrohr ausgeht, umfassend weiter einen Druckkolben, der in einem Zylinderraum axial beweglich ist, wobei in einem Raum oberhalb des Druckkolbens durch Gas ein Gegendruck erzeugt wird und wobei in einer Stellung des Druckkolbens das Behandlungsgas plötzlich aus dem Gasbehälter in das Injizierrohr einströmen kann, während in einer anderen Stellung des Druckkolbens die Verbindung zwischen dem Inneren des Gasbehälters und dem Injizierrohr verschlossen ist, gekennzeichnet durch die nachfolgend genannten Merkmale:
- Der Druckkolben (13) ist in dem Zylinderraum des Gasbehälters (10) auf und ab beweglich und unterteilt diesen Zylinderraum in einen Raum (15) unterhalb des Druckkolbens zur Aufnahme des Behandlungsgases und einen Raum (14) oberhalb des Druckkolbens zur Aufnahme des Gegendruckgases; unterhalb des Gasbehälters (10) ist ein Ventilgehäuse (20) vorgesehen mit einem Anschlußstutzen (21) für das Injizierrohr (2) einem Anschlußstutzen (22) für die Versorgungsleitung (4) sowie einem zu dem Zylinderraum (15) unterhalb des Druckkolbens (13) führenden Hauptkanal (16);
- Das Ventilgehäuse (20) nimmt einen Steuerkolben (25) auf, der quer zum Hauptkanal (16) und zur Bewegungsrichtung des Druckkolbens (13) gegen eine Federkraft beweglich ist, wobei der Steuerkolben (25) in einer Anschlagsstellung einen Weg vom Anschlußstutzen (22) zum Hauptkanal (16) zum Füllen des Gasbehälters (10) freigibt;
- Im Ventilgehäuse (20) ist ein Bypasskanal (33) vorgesehen, der von dem Zylinderraum (15) zu einer Nebenkammer (31) führt für den Durchgang von Behandlungsgas, durch das bei Erreichen eines Umsteuerdrucks der Steuerkolben (25) entgegen dem Federdruck aus der Anschlagsstellung in eine Injizierstellung bewegt wird, in der der Anschlußstutzen (22) für die Versorgung geschlossen und ein Weg vom Hauptkanal (16) zum Anschlußstutzen (21) für das Injizierrohr (2) freigegeben wird.

2. Gerät nach Anspruch 1, dadurch gekennzeichnet, daß zwischen Bypasskanal (33) und Nebenkammer (31) eine Regulierungseinrichtung zur Einstellung eines Umsteuerdruckes eingebaut ist.

3. Gerät nach Anspruch 2, dadurch gekennzeichnet, daß die Regulierung des Umsteuerdruckes durch eine Regelkugel (29), eine zugeordnete Feder (30) und eine Justierschraube (30a) gebildet wird.

4. Gerät nach Anspruch 1, dadurch gekennzeichnet, daß in der Kolbenhülse (24) Düsenöffnungen (24a, 24b, 24c) gebildet sind.

5. Gerät nach Anspruch 4, dadurch gekennzeichnet, daß im Steuerkolben Ringräume (25a, 25b) gebildet sind.

6. Gerät nach einem der Ansprüche 1 bis 5, dadurch gekennzeichnet, daß im unteren Endbereich des Injizierrohrs (2) ein Schußkopf (40) mit mehreren, vorzugsweise vier auf einem Ring angeordneten über den Umfang verteilten Düsen (41) angeordnet ist für den Austritt des Behandlungsgases.

7. Gerät nach einem der Ansprüche 1 bis 6, dadurch gekennzeichnet, daß die Düsen (41) eine etwa nadelkopfgroße Austrittsöffnung für das Behandlungsgas aufweisen, insbesondere mit einem Durchmesser von 0,05 bis 0,3 mm, vorzugsweise zwischen 0,1 bis 0,2 mm.

8. Gerät nach einem der Ansprüche 1 bis 7, dadurch gekennzeichnet, daß der Querschnitt der Düsenöffnungen durch Auswechslung der Düsen (41) veränderbar ist.

9. Gerät nach einem der Ansprüche 1 bis 8, dadurch gekennzeichnet, daß mit Abstand vom unteren Ende des Injizierrohrs (2) dieses einen weiteren Düsenkopf (43) mit weiteren radial über den Umfang verteilt angeordneten Düsen (44), die gegebenenfalls auswechselbar sind, aufweist.

10. Verfahren zur Sanierung von Böden, Wasser- und Abwasseranlagen oder Gewässern durch Injizieren eines Behandlungsgases, dadurch gekennzeichnet, daß bei diesem ein Gerät gemäß einem der Ansprüche 1 bis 9 verwendet wird.

## Claims

1. Device for injecting gases in the ground, water plants and waste water plants or waters comprising a gas tank which is connected to a supply line and from which an injecting tube lead into the ground is starting, further comprising a pressure piston which is axially movable in a cylinder space, in a space above the pressure piston a counter pressure being produced by means of gas and in one position of the pressure piston the treatment gas being able to flow suddenly from the gas tank (10) into the injecting tube, whereas in another position of the pressure piston the connection between the interior of the gas tank and the injecting tube being closed, characterised by the following features:
- the pressure piston (13) is movable up and down in the cylinder space of the gas tank (10) and divides this cylinder space in a space (15) below the pressure piston for accommodating the treatment gas and a space (14) above the pressure piston for accommodating the gas for counter pressure; below the gas tank (10) a valve chamber (20) is provided comprising a connecting socket (21) for the Injecting tube (2) with a connecting socket (22) for the supply line (4) as well as a main channel (16) leading to the cylinder space (15) below the pressure piston (13);
- the valve chamber (20) accommodates a control piston (25) which is movable transversely to the main channel (16) and to the moving direction of the pressure piston (13) against a spring force, the control piston (25) clearing a line from the connecting socket (22) to the main channel (16) for filling the gas tank in one stop position;
- in the valve chamber (20) there is provided a bypass channel (33) which leads from the cylinder space (15) to a secondary chamber (31) for the passage of treatment gas by means of which the control piston (25) is moved against the spring pressure from the stop position into an injecting position when reaching a reversing pressure, in said injecting position the connecting socket (22) for the supply being closed and a line from the main channel (16) to the connecting socket (21) for the injecting tube (2) being cleared.

2. Device as claimed in claim 1, characterised in that between the bypass channel (33) and the secondary chamber (31) there is incorporated a regulating device for adjusting a reversing pressure

3. Device as claimed in claim 2, characterised in that the regulating device for the reversing pressure is formed by a control ball (29), an associated spring (30) and an adjusting screw (30a).

4. Device as claimed in claim 1, characterised in that in the piston sleeve (24) jet orifices (24a, 24b, 24c) are formed.

5. Device as claimed in claim 4, characterised in that annular spaces (25a, 25b) are formed in the control piston.

6. Device as claimed in any one of claims 1 to 5, characterised in that in the lower end region of the injecting tube (2) there is arranged a blast head (40) for the discharge of the treatment gas comprising several, preferably four, jets (41) arranged on a ring and distributed over the circumference.

7. Device as claimed in any one of claims 1 to 6, characterised in that the jets (41) comprise an outlet orifice approximately of the size of a needle head for the treatment gas, particularly comprising a diameter of 0.05 to 0.3 mm, preferably between 0.1 to 0.2 mm.

8. Device as claimed in any one of claims 1 to 7, characterised in that the diameter of the jet orifices is variable by exchanging the jets (41).

9. Device as claimed in any one of claims 1 to 8, characterised in that the injecting tube (2) comprises at a distance from its lower end a further jet head (43) with further jets (44) radially distributed over the circumference, said jets being likewise exchangeable if required.

10. Process for the sanitation of grounds, water plants and waste water plants or waters by injecting a treatment gas, characterised in that in this process a device according to any one of claims 1 to 9 is used.

## Revendications

1. Appareil d'injection de gaz dans les sols, dans les bassins d'eau, les installations d'épuration et les eaux en général, comprenant un réservoir de gaz, qui est raccordé à une conduite d'approvisionnement et dont est issu un tube d'injection introduit dans le sol, comprenant en outre un piston de compression mobile axialement dans une chambre de cylindre, où dans une chambre située au-dessus du piston de compression est produite une contre-pression par un gaz et où pour une position du piston de compression, le gaz de traitement peut passer brusquement du réservoir de gaz dans le tube d'injection, tandis que pour une autre position du piston de compression la communication entre l'enceinte du réservoir de gaz et le tube d'injection est coupée, présentant les caractéristiques ci-après:
- le piston de compression (13) peut exécuter un mouvement vers le haut et vers le bas à l'intérieur du réservoir de gaz cylindrique (10) et partage cette enceinte en une chambre (15) au-dessous du piston de compression pour la réception du gaz de traitement et une chambre (14) au-dessus du piston de compression pour la réception du gaz de contre-pression; au-dessous du réservoir de gaz (10) est prévu un carter de soupape (20) avec un raccord (21) pour le tube d'injection (2) avec un raccord (22) pour la conduite d'approvisionnement (4) ainsi qu'avec une canalisation principale (16) aboutissant à la chambre cylindrique (15) située au-dessous du piston de compression (13);
- le carter de soupape (20) contient un piston de commande (25) mobile transversalement à la canalisation principale (16) et à la direction de déplacement du piston de compression (13) à l'encontre de l'action d'un ressort, le piston de commande (25) établissant, dans une position de butée, la communication entre le raccord (22) de la canalisation principale (16) aux fins du remplissage du réservoir de gaz (10);
- dans le carter de soupape (20) est prévu un canal de dérivation (33), passant de la chambre cylindrique (15) vers une chambre auxiliaire (31) pour le passage du gaz de traitement, gaz qui lorsque une pression d'inversion déterminée est atteinte refoule le piston de commande (25) à l'encontre de la pression du ressort depuis la position de butée vers une position d'injection, dans laquelle le raccord (22) pour l'approvisionnement est obturé et qu'une communication entre la canalisation principale (16) et le raccord (21) du tube d'injection (2) est établie.

2. Appareil suivant la revendication 1, caractérisé en ce que entre le canal de dérivation (33) et la chambre auxiliaire (31) est monté un dispositif de réglage pour le réglage de la pression d'inversion.

3. Appareil suivant la revendication 2, caractérisé en ce que le réglage de la pression d'inversion est réalisé à l'aide d'une bille de réglage (29), d'un ressort associé (30) et d'une vis d'ajustage (30a).

4. Appareil suivant la revendication 1, caractérisé en ce que dans la chemise (24) du piston sont pratiqués des orifices de buse (24a, 24b, 24c).

5. Appareil suivant la revendication 4, caractérisé en ce que dans le piston de commande sont formées des chambres annulaires (25a, 25b).

6. Appareil suivant l'une quelconque des revendications de 1 à 5, caractérisé en ce que dans la région terminale inférieure du tube d'injection (2) est disposée une tête de tirage (40) avec plusieurs de préférence quatre buses (41) distribuées suivant un cercle sur la périphérie, pour l'échappement du gaz de traitement.

7. Appareil suivant l'une quelconque des revendications de 1 à 6, caractérisé en ce que les buses (41) présentent un orifice de sortie ayant approximativement la taille d'une tête d'aiguille pour le gaz de traitement, orifice de sortie d'un diamètre de 0,05 à O,3 mm et de préférence de 0,1 à 0,2 mm.

8. Appareil suivant l'une quelconque des revendications de 1 à 7, caractérisé en ce que la section transversale des orifices des buses peut être modifiée par le remplacement des buses (41).

9. Appareil suivant l'une quelconque des revendications de 1 à 8, caractérisé en ce qu'à distance de l'extrémité inférieure du tube d'injection (2), ce dernier présente une tête à buses (43) supplémentaire avec des buses (44) distribuées radialement sur la périphérie, les buses (44) étant le cas échéant interchangeables.

10. Procédé pour l'assainissement de sols, de bassins d'eau, d'installations d'épuration et d'eaux en général par injection d'un gaz de traitement, caractérisé en ce qu'un appareil suivant l'une quelconque des revendications de 1 à 9 est utilisé.
